(19)

Europäisches
Patentamt
European
Patent Office
Office européen
des brevets

(11) **EP 2 421 193 A1**

(12) **EUROPEAN PATENT APPLICATION**

(43) Date of publication:
**22.02.2012 Bulletin 2012/08**

(51) Int Cl.:
***H04L 9/30*** *(2006.01)*

(21) Application number: **10306285.7**

(22) Date of filing: **23.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.08.2010 EP 10290452**

(71) Applicant: **Thomson Licensing
92443 Issy-les-Moulineaux (FR)**

(72) Inventors:
• **Joye, Marc
  35510, Cesson-Sévigné (FR)**
• **Devigne, Julien
  35510, Cesson-Sévigné (FR)**

(74) Representative: **Ruellan-Lemonnier, Brigitte
Technicolor
European Patent Operations
1-5 Rue Jeanne d'Arc
92443 Issy-les-Moulineaux Cedex (FR)**

(54) **Method and processor for performing arithmetic operations on binary Huff curves**

(57) A method for performing an arithmetic operation on a binary Huff curve defined by a set of projective points ($X :$ $Y : Z) \in P^2(F_2m)$ satisfying the equation $aX(Y^2 + fYZ + Z^2) = bY(X^2 + fXZ + Z^2)$, where $a,b,f \in F^*_2m$ and $a \neq b$. A processor obtains a first finite point $\boldsymbol{P} = (x_1, y_1) \in E$, performs the arithmetic operation using the first point $\boldsymbol{P}$ to obtain a second point P', and outputs the second point P'. The arithmetic operation comprises at least one of:

calculating a point inverse using the formula $-\boldsymbol{P} = (\overline{x}_1, \overline{y}_1) \in E$ with $\overline{x}_1 = \dfrac{y_1(b+ax_1y_1)}{a+bx_1y_1}$ and $\overline{y}_1 = \dfrac{x_1(a+bx_1y_1)}{b+ax_1y_1}$ or

the formula $-\boldsymbol{P} = (\overline{x}_1, \overline{y}_1) \in E$ with $\overline{x}_1 = \dfrac{y_1(\widehat{\alpha}x_1+1)}{\widehat{\beta}y_1+1}$ and $\overline{y}_1 = \dfrac{x_1(\widehat{\beta}y_1+1)}{\widehat{\alpha}x_1+1}$, where $\widehat{\alpha} = \dfrac{a+b}{bf}$ and $\widehat{\beta} = \dfrac{a+b}{af}$,

calculating a point doubling using the formula $[2]P = (x_3, y_3)$ with $x_3 = \dfrac{f(a+b)x_1^2(1+y_1)^2}{b(1+x_1)^2(1+x_1y_1)^2}$ and

$y_3 = \dfrac{f(a+b)y_1^2(1+x_1)^2}{a(1+y_1)^2(1+x_1y_1)^2}$,

calculating a point addition between the point P and a further finite point $\boldsymbol{Q} = (x_2, y_2) \in E$, where $\boldsymbol{P} \neq \boldsymbol{Q}$, using the formula

$\boldsymbol{P} + \boldsymbol{Q} = (x_3, y_3)$ with $x_3 = \dfrac{(x_1y_1+x_2y_2)(1+y_1y_2)}{(y_1+y_2)(1+x_1x_2y_1y_2)}$ and $y_3 = \dfrac{(x_1y_1+x_2y_2)(1+x_1x_2)}{(x_1+x_2)(1+x_1x_2y_1y_2)}$, and

calculating a point addition between the point P and a further finite point Q $(x_2, y_2) \in E$, where $\boldsymbol{P}$ may be equal to $\boldsymbol{Q}$, using the formula $\boldsymbol{P} + \boldsymbol{Q} = (x_3, y_3)$ with

$$\begin{cases} x_3 = \dfrac{b(x_1+x_2)(1+x_1x_2y_1y_2)+f(a+b)x_1x_2(1+y_1y_2)}{b(1+x_1x_2)(1+x_1x_2y_1y_2)} \\ y_3 = \dfrac{a(y_1+y_2)(1+x_1x_2y_1y_2)+f(a+b)y_1y_2(1+x_1x_2)}{a(1+y_1y_2)(1+x_1x_2y_1y_2)} \end{cases}.$$

Also provided is a processor (10).

**Description**

TECHNICAL FIELD

The present invention relates generally to elliptic curves, and more particularly to unified addition formulae for Huff curves.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Elliptic curve cryptography (ECC) is a technology of choice for the implementation of secure systems. A main advantage of it is the absence of sub-exponential algorithms to solve the underlying hard problem. Elliptic curve cryptosystems therefore feature smaller key sizes, which results in smaller memory and processor requirements and are thus especially well suited to memory-constrained devices such as smartcards.

For the implementation of elliptic curve cryptosystems, two types of finite fields are mainly used: large prime fields and fields of characteristic 2. This description focuses on the binary case and only on non-supersingular elliptic curves, to prevent the so-called MOV reduction (see Alfred Menezes, Tatsuaki Okamoto, and Scott Vanstone. Reducing elliptic curve discrete logarithms to a finite field. IEEE Transactions on Information Theory, 39(5):1639-1646, 1993).

An elliptic curve over a field $\mathbb{K}$ is a smooth projective algebraic curve of genus 1 with a specified $\mathbb{K}$ -rational point. More explicitly, when

$$\mathbb{K} = \mathbb{F}_{2^m},$$

a (non-supersingular) elliptic curve is given by the set of solutions in the affine plane to the Weierstraß equation

$$E_{/\mathbb{F}_{2^m}}: y^2 + xy = x^3 + a_2 x^2 + a_6 \qquad (a_6 \neq 0)$$

together with the extra point at infinity $\mathcal{O}$ = (0 : 1 : 0). It is well known that the points on an elliptic curve given by a Weierstraß equation endows a group structure under the chord-and-tangent addition (see Joseph H. Silverman. The Arithmetic of Elliptic Curves, volume 106 of Graduate Texts in Mathematics, chapter III. Springer-Verlag, 1986). The identity element is $\mathcal{O}$ . The inverse of a point $P_0 = (x_0, y_0) \in E\backslash\{\mathcal{O}\}$ is given by $-P_o = (x_0, y_0 + x_0)$. Hence, it appears that $\left(0, \sqrt{a_6}\right)$ is a rational point of order 2. If $P_1 + P_2 = P_3$ with $P_i = (x_i, y_i) \in E\backslash\{\mathcal{O}\}$ and $P_1 \neq P_2$, then

$$x_3 = \lambda^2 + \lambda + a_2 + x_1 + x_2 \text{ and } y_3 = \lambda(x_1 + x_3) + x_3 + y_1$$

where $\lambda = \frac{y_1 + y_2}{x_1 + x_2}$ if $x_1 \neq x_2$ and $\lambda = x_1 + \frac{y_1}{x_1}$ if $x_1 = x_2$. .

There are other known models to represent elliptic curves (see e.g. David V. Chudnovsky and Gregory V. Chudnovsky. Sequences of numbers generated by addition in formal groups and new primality and factorization tests. Advances in Applied Mathematics, 7(4):385-434, 1986 and Explicit-formulas database (EFD), http://www.hyperelliptic.org/EFD/).

Having different models at one's disposal is useful as this gives rise to a different arithmetic with different properties. An expected outcome is of course improved efficiency, which can be observed at different levels: speed, memory and processor requirements, bandwidth, etc. Another possible benefit is the ease of implementation. Of particular interest are the unified and complete addition laws, which reduce the number of cases to handle. The latter aspect can help preventing certain attacks, including those based on side-channel analysis (see Paul Kocher, Joshua Jaffe and Benjamin Jun. Differential power analysis. In M. Wiener, editor, Advances in Cryptology - CRYPTO '99, volume 1666 of Lecture Notes in Computer Science, pages 388-397. Springer-Verlag, 1999) or exceptional procedures (see Tetsuya Izu and Tsuyoshi Takagi. Exceptional procedure attack on elliptic curve cryptosystems. In Y.G. Desmedt, editor, Public Key Cryptography - PKC 2003, volume 2567 of Lecture Notes in Computer Science, pages 244-239. Springer, 2003). Yet another application resides in batch computing (see Daniel J. Bernstein. Batch binary Edwards. In S. Halevi, editor, Advances in Cryptology - CRYPTO 2009, volume 5667 of Lecture Notes in Computer Science, pages 317-336. Springer, 2009).

### Binary Huff Curves

A specific model for elliptic curves was introduced by Huff while studying a diophantine problem; see Gerald B. Huff. Diophantine Problems in Geometry and Elliptic Ternary Forms. Duke Math. J., 15:443-453, 1948; see also Williams D. Peeples, Jr. Elliptic Curves and Rational Distance Sets. Proc. Am. Math. Soc., 5:29-33, 1954.

The Huff model was recently revisited by Marc Joye, Mehdi Tibouchi, and Damien Vergnaud in "Huff's Model for Elliptic Curves"; in G. Hanrot, F. Morain, and E. Thomé, editors, Algorithmic Number Theory (ANTS-IX), volume 6197 of Lecture Notes in Computer Science, pages 234-250, Springer , 2010. The paper fully covers fields of odd characteristic. For binary fields, an extended model is also proposed, but no details are given.

A binary Huff curve is the set of projective points

$$(X:Y:Z) \in \mathbb{P}^2(\mathbb{F}_{2^m})$$

that satisfy the equation

$$E_{/\mathbb{F}_{2^m}}: aX(Y^2 + YZ + Z^2) = bY(X^2 + XZ + Z^2), \tag{1}$$

where $a, b \in \mathbb{F}_{2^m}^*$ and $a \neq b$.

There are three points at infinity satisfying the curve equation: $(a: b: 0)$, $(1: 0: 0)$ and $(0: 1: 0)$.

The affine model corresponding to the binary Huff curve (Eq. (1)) is given by

$$ax(y^2 + y + 1) = by(x^2 + x + 1).$$

As stated in §3.4 of "Huff's Model for Elliptic Curves", this curve is birationally equivalent to the Weierstraß elliptic curve

$$v(v + (a + b)u) = u(u + a^2)(u + b^2)$$

under the inverse maps

$$(x, y) \leftarrow \left(\frac{b(u+a^2)}{v}, \frac{a(u+b^2)}{v+(a+b)u}\right) \text{ and } (u, v) \leftarrow \left(\frac{ab}{xy}, \frac{ab(axy+b)}{x^2y}\right). \tag{2}$$

The set of points on a binary Huff curve forms a group whose identity element is $o = (0,0)$. While these inverse maps are not line-preserving, the group law on a binary Huff curve satisfies the chord-and-tangent rule. $l_{P,Q}$ is the line joining points $P$ and Q. This line intersects the curve in a third point (counting multiplicities) that is denoted by $P*Q$. $l_{R,0}$ is the line through $R := P*Q$ and $o$. The addition of $P$ and $Q$ is defined as the third point of intersection of $l_{R,0}$ with the curve, that is, $P+Q = R*o$.

However, the article in question provides no details, which means that the binary Huff curves may not be implemented. The present invention provides such details and can thus make it possible to use binary Huff curves for elliptic curve cryptography.

SUMMARY OF INVENTION

In a first aspect, the invention is directed to a method for performing an arithmetic operation on a binary Huff curve defined by a set of projective points

$$(X : Y : Z) \in \mathbb{P}^2(\mathbb{F}_{2^m})$$

satisfying the equation $aX(Y^2 + fYZ + Z^2) = bY(X^2 + fXZ + Z^2)$, where $a, b, f \in \mathbb{F}_{2^m}^*$ and $a \neq b$. A processor obtains a first finite point $P = (x_1, y_1) \in E$, performs the arithmetic operation using the first point $P$ to obtain a second point $P'$, and outputs the second point $P'$. The arithmetic operation comprises at least one of:

calculating a point inverse using the formula $-P = (\bar{x}_1, \bar{y}_1) \in E$ with $\bar{x}_1 = \dfrac{y_1(b + ax_1y_1)}{a + bx_1y_1}$ and $\bar{y}_1 = \dfrac{x_1(a + bx_1y_1)}{b + ax_1y_1}$

or the formula $-P = (\overline{x_1}, \overline{y_1}) \in E$ with $\bar{x}_1 = \dfrac{y_1(\hat{\alpha}x_1 + 1)}{\hat{\beta}y_1 + 1}$ and $\bar{y}_1 = \dfrac{x_1(\hat{\beta}y_1 + 1)}{\hat{\alpha}x_1 + 1}$, , where $\hat{\alpha} = \dfrac{a + b}{bf}$ and

$\hat{\beta} = \dfrac{a + b}{af}$, ,

calculating a point doubling using the formula $[2]P = (x_3, y_3)$ with $x_3 = \dfrac{f(a+b)x_1^2(1 + y_1)^2}{b(1 + x_1)^2(1 + x_1y_1)^2}$ and

$y_3 = \dfrac{f(a+b)y_1^2(1 + x_1)^2}{a(1 + y_1)^2(1 + x_1y_1)^2}$,

calculating a point addition between the point $P$ and a further finite point $Q = (x_2, y_2) \in E$, where $P \neq Q$, using the

formula $P + Q = (x_3, y_3)$ with $x_3 = \dfrac{(x_1y_1 + x_2y_2)(1 + y_1y_2)}{(y_1 + y_2)(1 + x_1x_2y_1y_2)}$ and $y_3 = \dfrac{(x_1y_1 + x_2y_2)(1 + x_1x_2)}{(x_1 + x_2)(1 + x_1x_2y_1y_2)}$, and

calculating a point addition between the point $P$ and a further finite point $Q = (x_2, y_2) \in E$, where $P$ may be equal to $Q$, using the formula $P + Q = (x_3, y_3)$ with

$$\begin{cases} x_3 = \dfrac{b(x_1 + x_2)(1 + x_1x_2y_1y_2) + f(a+b)x_1x_2(1 + y_1y_2)}{b(1 + x_1x_2)(1 + x_1x_2y_1y_2)} \\ y_3 = \dfrac{a(y_1 + y_2)(1 + x_1x_2y_1y_2) + f(a+b)y_1y_2(1 + x_1x_2)}{a(1 + y_1y_2)(1 + x_1x_2y_1y_2)} \end{cases}.$$

In a first preferred embodiment, = 1.
In a second preferred embodiment, the method is a cryptographic method.
In a second preferred embodiment, the method further comprises a preceding step of transforming a point on a first elliptic curve $v(v + (a + b) fu) = u(u + a^2)(u + b^2)$ into the first point $P$ on the binary Huff curve under the map

$(x, y) \leftarrow \left( \dfrac{b(u + a^2)}{v}, \dfrac{a(u + b^2)}{v + (a+b)fu} \right)$, , and the step of performing the arithmetic operation comprises obtaining an intermediate point $P''$ on the binary Huff curve that is transformed into the second point $P'$ on the first elliptic curve under

the map $(u, v) \leftarrow \left( \dfrac{ab}{xy}, \dfrac{ab(axy + b)}{x^2y} \right)$.

In a second aspect, the invention is directed to a processor for performing an arithmetic operation on a binary Huff curve defined by a set of projective points

$$(X : Y : Z) \in \mathbb{P}^2(\mathbb{F}_{2^m})$$

satisfying the equation $aX(Y^2 + fYZ + Z^2) = bY(X^2 + fXZ + Z^2)$, where $a, b, f \in \mathbb{F}_{2^m}^*$ and $a \neq b$. The processor is adapted to obtain a first finite point $\boldsymbol{P} = (x_1, y_1) \in E$, perform the arithmetic operation using the first point $\boldsymbol{P}$ to obtain a second point $\boldsymbol{P'}$, and output the second point $\boldsymbol{P'}$. The arithmetic operation comprises at least one of:

calculating a point inverse using the formula $\boldsymbol{-P} = (\bar{x}_1, \bar{y}_1) \in E$ with $\bar{x}_1 = \dfrac{y_1(b+ax_1y_1)}{a+bx_1y_1}$ and $\bar{y}_1 = \dfrac{x_1(a+bx_1y_1)}{b+ax_1y_1}$

or the formula $\boldsymbol{-P} = (\bar{x}_1, \bar{y}_1) \in E$ with $\bar{x}_1 = \dfrac{y_1(\hat{\alpha}x_1+1)}{\hat{\beta}y_1+1}$ and $\bar{y}_1 = \dfrac{x_1(\hat{\beta}y_1+1)}{\hat{\alpha}x_1+1}$, , where $\hat{\alpha} = \dfrac{a+b}{bf}$ and

$\hat{\beta} = \dfrac{a+b}{af}$, ,

calculating a point doubling using the formula $[2]\boldsymbol{P} = (x_3, y_3)$ with $x_3 = \dfrac{f(a+b)x_1^2(1+y_1)^2}{b(1+x_1)^2(1+x_1y_1)^2}$ and

$y_3 = \dfrac{f(a+b)y_1^2(1+x_1)^2}{a(1+y_1)^2(1+x_1y_1)^2}$,

calculating a point addition between the point $\boldsymbol{P}$ and a further finite point $\boldsymbol{Q} = (x_2, y_2) \in E$, where $\boldsymbol{P} \neq \boldsymbol{Q}$, using the

formula $\boldsymbol{P} + \boldsymbol{Q} = (x_3, y_3)$ with $x_3 = \dfrac{(x_1y_1+x_2y_2)(1+y_1y_2)}{(y_1+y_2)(1+x_1x_2y_1y_2)}$ and $y_3 = \dfrac{(x_1y_1+x_2y_2)(1+x_1x_2)}{(x_1+x_2)(1+x_1x_2y_1y_2)}$,, and

calculating a point addition between the point $\boldsymbol{P}$ and a further finite point $\boldsymbol{Q} = (x_2, y_2) \in E$, where $\boldsymbol{P}$ may be equal to

$\boldsymbol{Q}$, using the formula $\boldsymbol{P} + \boldsymbol{Q} = (x_3, y_3)$ with $\begin{cases} x_3 = \dfrac{b(x_1+x_2)(1+x_1x_2y_1y_2)+f(a+b)x_1x_2(1+y_1y_2)}{b(1+x_1x_2)(1+x_1x_2y_1y_2)} \\ y_3 = \dfrac{a(y_1+y_2)(1+x_1x_2y_1y_2)+f(a+b)y_1y_2(1+x_1x_2)}{a(1+y_1y_2)(1+x_1x_2y_1y_2)} \end{cases}$ .

## BRIEF DESCRIPTION OF DRAWINGS

Preferred features of the present invention will now be described, by way of non-limiting example, with reference to the accompanying drawings, in which

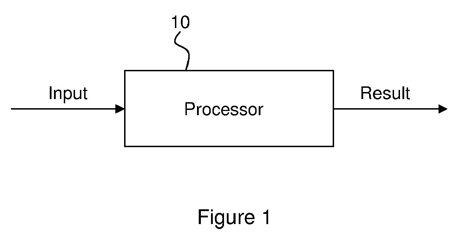

Figure 1 illustrates a device for performing cryptography calculations according to a preferred embodiment of the present invention.

## DESCRIPTION OF EMBODIMENTS

The description now provides details about the binary Huff curves introduced in the background section of the present application.

**Point inverse** Identity element o is not an inflection point. The inverse of a point $\boldsymbol{P}$ is therefore not defined as

$\boldsymbol{P}*\boldsymbol{o}$. $\boldsymbol{-P} = \boldsymbol{P}*\boldsymbol{A}$, where $A = \left(\dfrac{b}{a+b}, \dfrac{a}{a+b}\right)$ is the third point of intersection of the tangent line at o with the curve.

Another way to get the inverse is to use the birational equivalence with the Weierstraß form. $\boldsymbol{P} = (x_1, y_1) \in E$ is a finite point. Then, whenever defined, $\boldsymbol{-P} = (\bar{x}_1, \bar{y}_1) \in E$ with

$$\bar{x}_1 = \frac{y_1(b+ax_1y_1)}{a+bx_1y_1} \text{ and } \bar{y}_1 = \frac{x_1(a+bx_1y_1)}{b+ax_1y_1}. \tag{3}$$

If $a + bx_1y_1 = 0$, i.e. $P = \left(\frac{a+b}{b}, \frac{a}{a+b}\right)$, , then $-P = (1: 0: 0)$. If $b + ax_1y_1 = 0$, i.e. $P = \left(\frac{b}{a+b}, \frac{a+b}{a}\right))$, then $-P = (0: 1: 0)$.

For the points at infinity, $-(a: b: 0) = (a: b: 0)$, $-(1:0:0) = \left(\frac{a+b}{b}, \frac{a}{a+b}\right)$, , and $-(0:1:0) = \left(\frac{b}{a+b}, \frac{a+b}{a}\right)$ . It should be noted that $(a: b: 0)$ has order 2.

**Point doubling** The birational equivalence could also be used to derive the doubling formula, but, as the calculation is difficult, it is easier to rely on the geometric interpretation of the addition law.

$P = (x_1, y_1) \in E$ is a finite point. The third point of intersection of the tangent line to the curve at $P$ is $S = P * P$. Then $[2]P = S * o$, which gives $[2]P = (x_3, y_3)$ with

$$x_3 = \frac{(a+b)x_1^2(1+y_1)^2}{b(1+x_1)^2(1+x_1y_1)^2} \text{ and } y_3 = \frac{(a+b)y_1^2(1+x_1)^2}{a(1+y_1)^2(1+x_1y_1)^2}. \qquad (4)$$

If $x_1 = 1$ then $[2]P = (1: 0: 0)$. If $y_1 = 1$ then $[2]P = (0: 1: 0)$. If $x_1y_1 = 1$ (i.e. $P = (\zeta, \zeta^1)$ with $\zeta^2 + \zeta + 1 = 0$) then $[2]P = (a: b: 0)$. (The skilled person will appreciate that $(1,1)$ is not a point on E.)

It should be noted that since a solution to $\zeta^2 + \zeta + 1 = 0$ is a non-trivial cubic root of unity, $(\zeta, \zeta^{-1})$ is a rational point if and only if the curve is defined over a binary extension field of even degree (i.e. over $\mathbb{F}_{2^n}$ with n even). It should also be noted that $(\zeta, \zeta^{-1})$ has order 4.

For the points at infinity, $[2] (a: b: 0) = o$ (since $(a: b: 0)$ has order 2), and $[2] (1: 0: 0) = [2] (0: 1: 0) = A$, where

$$A = \left(\frac{b}{a+b}, \frac{a}{a+b}\right). .$$

**Dedicated point addition**

$P = (x_1, y_1)$ and $Q = (x_2, y_2) \in E$ are two finite points with $P \# Q$. As already mentioned, the addition of $P$ and $Q$ is given by $P + Q = (P * Q) * o$. Then, whenever defined, $P + Q = (x_3, y_3)$ with

$$x_3 = \frac{(x_1y_1 + x_2y_2)(1+y_1y_2)}{(y_1+y_2)(1+x_1x_2y_1y_2)} \text{ and } y_3 = \frac{(x_1y_1 + x_2y_2)(1+x_1x_2)}{(x_1+x_2)(1+x_1x_2y_1y_2)}. \qquad (5)$$

If $x_1 = x_2$, then $P + Q = (0:1:0)$. If $y_1 = y_2$, then $P + Q = (1:0:0)$.

It should be noticed that when $x_1 = x_2$, it may be assumed that $y_1 \neq 0$; otherwise $x_1 = x_2 = 0$ and thus $P = Q = o$. Then $(x_1, y_1) + \left(x_1, \frac{1}{y_1}\right) = = (0:1:0)$. Similarly, for $x_1 \neq 0$, $(x_1, y_1) + \left(\frac{1}{x_1}, y_1\right) = (1:0:0)$.

Supposing that $x_1 \neq x_2$ and $y_1 \neq y_2$, if $x_1x_2y_1y_2 = 1$ and $x_1x_2 = 1$, then $P + Q = [2]P + (a: b: 0)$. If $x_1x_2y_1y_2 = 1$ and $x_1x_2 \neq 1$, then $P + Q = (a: b: 0)$.

When $P = (x_1, y_1)$ is finite and $Q$ is at infinity, then

$$(x_1, y_1) + (a: b: 0) = \left(\frac{1}{x_1}, \frac{1}{y_1}\right),$$

$$(x_1, y_1) + (1: 0: 0) = \left(\frac{a+bx_1y_1}{y_1(b+ax_1y_1)}, \frac{x_1(a+bx_1y_1)}{b+ax_1y_1}\right)$$

$$(x_1, y_1) + (0: 1: 0) = \left(\frac{y_1(b+ax_1y_1)}{a+bx_1y_1}, \frac{b+ax_1y_1}{x_1(a+bx_1y_1)}\right)$$

and similarly when $P$ is at infinity and $Q$ is finite. If $x_1 = 0$ or $y_1 = 0$ (i.e. $P = o$) then $(x_1,y_1) + Q = Q$. If $a + bx_1y_1 = 0$ i.e.

$$P = \left(\frac{a+b}{b},\frac{a}{a+b}\right)) \text{ then } (x_1,y_1) + (0:1:0) = (a:b:0). \text{ If } b + ax_1y_1 = 0 \text{ (i.e. } P = \left(\frac{b}{a+b},\frac{a+b}{a}\right)) \text{ then } (x_1,y_1) + (1:0:0) = (a:b:0).$$

In addition, $(a{:}b{:}0) + (1{:}0{:}0) = (0{:}1{:}0)$, $(a{:}b{:}0) + (0{:}1{:}0) = (1{:}0{:}0)$, and $(1{:}0{:}0) + (0{:}1{:}0) = \left(\frac{a+b}{b},\frac{a+b}{a}\right)$. .

**Projective formulae** The addition formulae may also be expressed in a projective version. The doubling (Eq. (4)) of $P = (X_1 : Y_1 : Z_1)$ may be expressed as

$$X_3 = \alpha \cdot X_1^2 Z_1^2 (Y_1 + Z_1)^4,$$

$$Y_3 = \beta \cdot Y_1^2 Z_1^2 (X_1 + Z_1)^4,$$

$$Z_3 = (X_1 Y_1 + Z_1^2)^2 (X_1 + Z_1)^2 (Y_1 + Z_1)^2,$$

where $\alpha = \dfrac{a+b}{b}$ and $\beta = \dfrac{a+b}{b}$. .

For more efficient computation, this may be evaluated as

$$m_1 = X_1 Y_1 + Z_1^2, \; m_2 = X_1 Z_1, \; m_3 = Y_1 Z_1,$$

$$X_3 = \alpha \cdot [m_2 (Y_1 + Z_1)^2]^2,$$

$$Y_3 = \beta \cdot [m_3 (X_1 + Z_1)^2]^2,$$

$$Z_3 = [m_1 (m_1 + m_2 + m_3)]^2.$$

The dedicated addition (Eq. (5)) of $P = (X_1 : Y_1 : Z_1)$ and $Q = (X_2 : Y_2 : Z_2)$ may be expressed as

$$X_3 = (X_1 Y_1 Z_2^2 + X_2 Y_2 Z_1^2)(Y_1 Y_2 + Z_1 Z_2)(X_1 Z_2 + X_2 Z_1),$$

$$Y_3 = (X_1 Y_1 Z_2^2 + X_2 Y_2 Z_1^2)(X_1 X_2 + Z_1 Z_2)(Y_1 Z_2 + Y_2 Z_1),$$

$$Z_3 = (X_1 Z_2 + X_2 Z_1)(Y_1 Z_2 + Y_2 Z_1)(X_1 X_2 Y_1 Y_2 + Z_1^2 Z_2^2).$$

For more efficient computation, this may be evaluated as

$$m_1 = X_1 X_2, \; m_2 = Y_1 Y_2, \; m_3 = Z_1 Z_2, \; m_4 = (X_1 + Z_1)(X_2 + Z_2) + m_1 + m_3,$$

$$m_5 = (Y_1 + Z_1)(Y_2 + Z_2) + m_2 + m_3, \; m_6 = m_4(m_2 + m_3),$$

$$m_7 = m_5(m_1 + m_3), \; m_8 = m_1 m_2 + m_3{}^2,$$

$$m_9 = m_8 + (X_1 Y_1 + Z_1^2)(X_2 Y_2 + Z_2^2),$$

$$X_3 = m_6 m_9,$$

$$Y_3 = m_7 m_9,$$

$$Z_3 = m_4 m_5 m_8.$$

Even more efficient computation evaluates this, with extended coordinates ($X_i$, $Y_i$, $Z_i$, $T_i$) where $T_i = X_i\, Y_i$ ($i$ = 1,2,3), as

$$m_1 = X_1 X_2, \; m_2 = Y_1 Y_2, \; m_3 = Z_1 Z_2, \; m_4 = (X_1 + Z_1)(X_2 + Z_2) + m_1 + m_3,$$

$$m_5 = (Y_1 + Z_1)(Y_2 + Z_2) + m_2 + m_3, \; m_6 = m_4(m_2 + m_3),$$

$$m_7 = m_5(m_1 + m_3), \; m_8 = m_1 m_2 + m_3{}^2,$$

$$m_9 = m_8 + (T_1 + Z_1^2)(T_2 + Z_2^2),$$

$$X_3 = m_6 m_9,$$

$$Y_3 = m_7 m_9,$$

$$Z_3 = m_4 m_5 m_8,$$

$$T_3 = X_3 Y_3.$$

Unified point addition

The formulae for evaluation of $P + Q$ hereinbefore distinguish between doubling ($P = Q$) and dedicated addition ($P \neq Q$), as the dedicated addition formula is undefined when $P = Q$. It would therefore be desirable to have a unified point addition operation that can be used in both cases.

Equation (5), i.e. the formula for dedicated point addition states that with $P = (x_1, y_1)$ and $Q = (x_2, y_2) \in E$ being two finite points with $P \neq Q$, then whenever defined, $P + Q = (x_3, y_3)$ with

$$x_3 = \frac{(x_1 y_1 + x_2 y_2)(1 + y_1 y_2)}{(y_1 + y_2)(1 + x_1 x_2 y_1 y_2)} \text{ and } y_3 = \frac{(x_1 y_1 + x_2 y_2)(1 + x_1 x_2)}{(x_1 + x_2)(1 + x_1 x_2 y_1 y_2)}.$$

The point addition is defined up to the curve equation. Using the additional relations $ax_i(y_i^2 + y_i + 1) = by_i(x_i^2 + x_i + 1)$, $i \in \{1,2\}$ gives

$$\begin{cases} x_3 = \dfrac{b(x_1+x_2)(1+x_1 x_2 y_1 y_2)+(a+b)x_1 x_2(1+y_1 y_2)}{b(1+x_1 x_2)(1+x_1 x_2 y_1 y_2)} \\ y_3 = \dfrac{a(y_1+y_2)(1+x_1 x_2 y_1 y_2)+(a+b)y_1 y_2(1+x_1 x_2)}{a(1+y_1 y_2)(1+x_1 x_2 y_1 y_2)} \end{cases}. \tag{6}$$

Remarkably, these new expressions also work for doubling a point $P = (x_1, y_1)$. Indeed, setting $(x_2, y_2) = (x_1, y_1)$ in Equation (6) gives (since the binary characteristic entails that two times any value equals zero)

$$x_3 = \frac{(a+b)x_1^2(1+y_1^2)}{b(1+x_1^2)(1+x_1^2 y_1^2)} \text{ and } y_3 = \frac{(a+b)y_1^2(1+x_1^2)}{a(1+y_1^2)(1+x_1^2 y_1^2)}.$$

This may be compared with Equation (4)

$$x_3 = \frac{(a+b)x_1^2(1+y_1)^2}{b(1+x_1)^2(1+x_1 y_1)^2} \text{ and } y_3 = \frac{(a+b)y_1^2(1+x_1)^2}{a(1+y_1)^2(1+x_1 y_1)^2}.$$

Given that $(1+A)^2 = (1+A^2)$ because of the binary characteristic, it may easily be seen that the expressions are equal.

The unified addition law given by Equation (6) is defined when the denominators $b(1 + x_1 x_2)(1 + x_1 x_2 y_1 y_2)$ and $a(1 + y_1 y_2)(1 + x_1 x_2 y_1 y_2)$ are non-zero. If $x_1 x_2 y_1 y_2 = 1$, $x_1 x_2 \neq 1$ and $y_1 y_2 \neq 1$, then $P + Q = (a : b : 0)$. If $x_1 x_2 = 1$ or $y_1 y_2 = 1$, i.e. $P = (x_1, y_1)$ ($\neq o$) and $Q \in \left\{ \left( \frac{1}{x_1}, y_1 \right), \left( x_1, \frac{1}{y_1} \right), \left( \frac{1}{x_1}, \frac{1}{y_1} \right) \right\}$, , then

$$P + Q = \begin{cases} (1:0:0) & \text{if } x_1 x_2 = 1 \text{ and } y_1 = y_2 \\ (0:1:0) & \text{if } y_1 y_2 = 1 \text{ and } x_1 = x_2 \\ \left( \dfrac{b(1+x_1^2)(1+x_1^2 y_1^2)}{(a+b)x_1^2(1+y_1^2)}, \dfrac{a(1+y_1^2)(1+x_1^2 y_1^2)}{(a+b)y_1^2(1+x_1^2)} \right) & \text{otherwise} \end{cases}$$

The cases where the points $P$, or $Q$, or $P$ and $Q$, are at infinity have already been discussed hereinbefore.

Since the case $P = (x_1, y_1)$ and $Q \in \left\{ \left( \frac{1}{x_1}, y_1 \right), \left( x_1, \frac{1}{y_1} \right), \left( \frac{1}{x_1}, \frac{1}{y_1} \right) \right\}$ corresponds to $P + Q = (1 : 0 : 0)$, $P + Q = (0 : 1 : 0)$ and $Q = P + (a : b : 0)$, these exceptional cases always involve points at infinity. Hence, if $E$ is a binary Huff curve over $\mathbb{F}_{2^m}$ and

$$\mathbb{G} \subset E(\mathbb{F}_{2^m})$$

is a subgroup that does not contain $(a : b : 0)$, $(1 : 0 : 0)$ and $(0 : 1 : 0)$, then the unified addition formula given by Equation (6) is complete.

In particular, the addition formula is complete in a subgroup of odd order, provided that both $(1 : 0 : 0)$ and $(0 : 1 : 0)$ are of even order.

**Projective version** The unified addition (Equation (6)) $P + Q = (X_3 : Y_3 : Z_3)$, where $P = (X_1 : Y_1 : Z_1)$ and $Q = (X_2 : Y_2 : Z_2)$, may be expressed as

$$\begin{cases} X_3 = (Z_1 Z_2 + Y_1 Y_2)\big((X_1 Z_2 + X_2 Z_1)(Z_1^2 Z_2^2 + X_1 X_2 Y_1 Y_2) + \alpha X_1 X_2 Z_1 Z_2 (Z_1 Z_2 + Y_1 Y_2)\big) \\ Y_3 = (Z_1 Z_2 + X_1 X_2)\big((Y_1 Z_2 + Y_2 Z_1)(Z_1^2 Z_2^2 + X_1 X_2 Y_1 Y_2) + \beta Y_1 Y_2 Z_1 Z_2 (Z_1 Z_2 + X_1 X_2)\big) \quad (7) \\ Z_3 = (Z_1 Z_2 + X_1 X_2)(Z_1 Z_2 + Y_1 Y_2)(Z_1^2 Z_2^2 + X_1 X_2 Y_1 Y_2) \end{cases}$$

where $\alpha = \dfrac{a+b}{b}$ and $\beta = \dfrac{a+b}{b}.$.

For more efficient computation, this may be evaluated as

$$m_1 = X_1 X_2, \; m_2 = Y_1 Y_2, \; m_3 = Z_1 Z_2, \; m_4 = (X_1 + Z_1)(X_2 + Z_2) + m_1 + m_3,$$

$$m_5 = (Y_1 + Z_1)(Y_2 + Z_2) + m_2 + m_3, \; m_6 = m_1 m_3, \; m_7 = m_2 m_3,$$

$$m_8 = m_1 m_2 + m_3{}^2, \; m_9 = m_6 (m_2 + m_3)^2, \; m_{10} = m_7 (m_1 + m_3)^2,$$

$$m_{11} = m_8 (m_1 + m_3),$$

$$X_3 = m_4 m_{11} + \alpha \cdot m_9,$$

$$Y_3 = m_5 m_{12} + \beta \cdot m_{10},$$

$$Z_3 = m_{11}(m_1 + m_3).$$

**More formulae** There are, naturally, other unified addition formulae that are similar to Equation (6). For instance, whenever defined

$$\begin{cases} x_3 = \dfrac{(1+y_1y_2)\big(b(x_1+x_2)+x_1x_2(a+b+ay_1+ay_2)\big)}{b(1+x_1x_2)(1+x_1x_2y_1y_2)} \\[3mm] y_3 = \dfrac{(1+x_1x_2)\big(a(y_1+y_2)+y_1y_2(a+b+bx_1+bx_2)\big)}{a(1+y_1y_2)(1+x_1x_2y_1y_2)} \end{cases} \cdot \tag{6'}$$

In general, alternate unified formulae may be obtained by selecting another neutral element. This results in translating the group law. For instance, defining **o'** = (a : b : 0) as the neutral element yields, whenever defined, the following unified point addition formula

$$\begin{cases} x_3 = \dfrac{b(1+x_1x_2)(1+x_1x_2y_1y_2)}{b(x_1+x_2)(1+x_1x_2y_1y_2)+(a+b)x_1x_2(1+y_1y_2)} \\[2mm] \quad\; = \dfrac{b(1+x_1x_2)^2(1+x_1x_2y_1y_2)y_1y_2}{[b(x_1+x_2)(1+x_1x_2y_1y_2)+(a+b)x_1x_2(1+y_1y_2)](1+x_1x_2)y_1y_2} \\[2mm] y_3 = \dfrac{a(1+y_1y_2)(1+x_1x_2y_1y_2)}{a(y_1+y_2)(1+x_1x_2y_1y_2)+(a+b)y_1y_2(1+x_1x_2)} \\[2mm] \quad\; = \dfrac{a(1+y_1y_2)^2(1+x_1x_2y_1y_2)x_1x_2}{[b(x_1+x_2)(1+x_1x_2y_1y_2)+(a+b)x_1x_2(1+y_1y_2)](1+x_1x_2)y_1y_2} \end{cases} \tag{6''}$$

The corresponding projective version can advantageously be evaluated as

$$m_1 = X_1X_2,\; m_2 = Y_1Y_2,\; m_3 = Z_1Z_2,\; m_4 = m_1m_2,$$

$$m_5 = m_2m_3,\; m_6 = (X_1 + Z_1)(X_2 + Z_2) + m_1 + m_3,$$

$$X_3 = (m_1 + m_3)(m_4 + m_5)(m_3{}^2 + m_4),$$

$$Y_3 = \rho m_1(m_2 + m_3)^2(m_3{}^2 + m_4),$$

$$Z_3 = (m_4 + m_5)[\alpha m_1(m_3{}^2 + m_5) + (m_4 + m_3{}^2)],$$

where

$$\alpha = \frac{a+b}{b} \text{ and } \rho = \frac{a}{b}.$$

Differential point addition

In order to speed up the implementation of the elliptic curve factoring method (ECM) (see Hendrik W. Lenstra, Jr. Factoring Integers with Elliptic Curves. Annals of Mathematics, 126(2): 649-673, 1987) the so-called Montgomery representation was developed (see Peter L. Montgomery. Speeding up the Pollard and Elliptic Curve Methods of Factorization. Mathematics of Computation, 48(177):243-264; 1987). It was subsequently adapted to (ordinary) Weierstraß elliptic curves over binary fields (see Julio López and Ricardo Dahab. Fast Multiplication on Elliptic Curves over GF(2m) without Precomputation. In Ç. Koç and C. Paar, editors, Cryptographic Hardware and Embedded Systems - CHES '99, volume 1717 of Lecture Notes in Computer Science, pages 316-327. Springer, 1999 - see also Martijn Stam. On Montgomery-like Representations for Elliptic Curves over GF(2k). In Y.G. Desmedt, editor, Public Key Cryptography - PKC 2003, volume 2567 of Lecture Notes in Computer Science, pages 240-253. Springer, 2003 - and also Pierrick Gaudry and David Lubicz. The Arithmetic of Characteristic 2 Kummer Surfaces and of Elliptic Kummer Lines. Finite Fields and Applications, 15:246-260, 2009).

The idea stems from the observation that the x-coordinate of the sum of two points can be evaluated from the x-coordinates of the input points and the x-coordinate of their difference.

More generally, a differential point addition comprises calculating $w(P + Q)$ from $w(P)$, $w(Q)$ and $w(P - Q)$ for a certain coordinate function w. When such an operation is available, the value of $w([k]P)$ can be efficiently computed from the binary expansion of scalar $k$, $k = \sum_{i=0}^{l-1} k_i 2^i$ with $k_i \in \{0,1\}$ and $k_{l-1}$ = 1. Defining and $Q_j = P_j + P$, gives

$$\langle w(\mathbf{P}_{l-1}), w(\mathbf{Q}_{l-1})\rangle = \langle w(\mathbf{P}), w(\mathbf{P} + \mathbf{P})\rangle$$

and

$$\langle w(\mathbf{P}_j), w(\mathbf{Q}_j)\rangle = \begin{cases} \langle w(\mathbf{P}_{j+1} + \mathbf{P}_{j+1}), w(\mathbf{P}_{j+1} + \mathbf{Q}_{j+1})\rangle \text{ if } k_j = 0 \\ \langle w(\mathbf{P}_{j+1} + \mathbf{Q}_{j+1}), w(\mathbf{Q}_{j+1} + \mathbf{Q}_{j+1})\rangle \text{ if } k_j = 1 \end{cases}'$$

for $j = l$ - 2, ...,0. As $\kappa_0 = k$, the value of $w([k]P)$ is obtained at the end of the recursion as $w(P_0)$.

As already shown hereinbefore, the inverse of a point P = $(x_1, y_1)$ on a binary Huff curve is given by $-\mathbf{P} = (\bar{x}_1, \bar{y}_1)$ with $\bar{x}_1 = \frac{y_1(b+ax_1y_1)}{a+bx_1y_1}$ and $\bar{y}_1 = \frac{x_1(a+bx_1y_1)}{b+ax_1y_1}$. A natural choice for coordinate function w : $\mathbf{P} \to$ w($\mathbf{P}$) is therefore to design it as the product of the x- and y-coordinates, or as a function thereof. Doing this, it may be seen that $w(P) = w(-P)$.

Specifically, for a finite point $\mathbf{P} = (x_1, y_1)$ is defined w($\mathbf{P}$) = $x_1 y_1$. For the points at infinity, the following is defined: $w(1 : 0 : 0) = \frac{a}{b}$, $w(0 : 1 : 0) = \frac{b}{a}$, and $w(a : b : 0) = "\infty" = (1 : 0)$. Hence, for the differential doubling, Equation (4) immediately yields

$$w([2]\mathbf{P}) = \frac{\gamma \cdot w_1{}^2}{(1+w_1)^4} \ with \ \gamma = \frac{(a+b)^2}{ab}, \tag{8}$$

and where $w_1 = w(\mathbf{P})$, provided that $w_1 \neq 1$. If $w_1 = 1$, then $w([2]\mathbf{P}) = (1 : 0)$.

$\mathbf{Q}$ is a second point, different from $\mathbf{P}$, and $w_1$, $w_2$ and $\bar{w}$ respectively denote the w-coordinates of $\mathbf{P}$, $\mathbf{Q}$ and $\mathbf{Q}$-$\mathbf{P}$. It could in principle be possible to derive the formula for the differential addition from Equation (5), but a much simpler way is to rely on the connection between the choice of the w-coordinate and the birational map with the Weierstraß equation; cf. Equation (2).

Montgomery representation comes in two flavours: additive method and multiplicative method. The additive formula (Lemma 1 provided by López and Dahab, slightly generalized), whenever defined, gives

$$w(\mathbf{P} + \mathbf{Q}) = \frac{\bar{w} \cdot (w_1+w_2)^2}{(w_1+w_2)^2 + (\gamma\bar{w}) \cdot w_1 w_2} \ with \ \gamma = \frac{(a+b)^2}{ab}.$$

An application of the multiplicative formula (§ 3.2) provided by Martijn Stam yields after simplification

$$w(\boldsymbol{P} + \boldsymbol{Q}) = \frac{(w_1 + w_2)^2}{\bar{w} \cdot (1 + w_1 w_2)^2}, \tag{9}$$

provided that $w_1 w_2 \neq 1$. It will be appreciated that $\bar{w} \neq 0$ since $\boldsymbol{P} \neq \boldsymbol{Q}$. The case $w_1 w_2 = 1$ corresponds to the case $x_1 x_2 y_1 y_2 = 1$. If $w_1 w_2 = 1$ then $w(\boldsymbol{P} + \boldsymbol{Q}) = (1 : 0)$.

**Projective version**

To obtain projective formulae, the $w$-coordinate of a point $\boldsymbol{P}$ is represented by the pair $(W : Z) = (\Theta w(\boldsymbol{P}) : \Theta)$ if $\boldsymbol{P} \neq (a : b : 0)$, and $(W : Z) = (\Theta : 0)$ if $\boldsymbol{P} = (a : b : 0)$, for some non-zero $\Theta \in F_2 m$. Letting $w_i = (W_i : Z_i)$ for $i = 1, 2$, and $\bar{w} = (\bar{W} : \bar{Z})$, Equations (8) and (9) give

$$\begin{cases} W([2]\boldsymbol{P}) = \gamma \cdot (W_1 Z_1)^2 \\ Z([2]\boldsymbol{P}) = (W_1 + Z_1)^4 \end{cases} \text{ and } \begin{cases} W(\boldsymbol{P} + \boldsymbol{Q}) = \bar{Z}(W_1 Z_2 + W_2 Z_1)^2 \\ Z(\boldsymbol{P} + \boldsymbol{Q}) = \bar{W}(W_1 W_2 + Z_1 Z_2)^2 \end{cases}.$$

Generalized binary Huff curves

The transformations given by Equation (2) show how to express any binary Huff curve as a Weierstraß curve. The reverse is however not always possible: not all ordinary elliptic curves over $F_2 m$ can be expressed in the Huff form of Equation (1). Worse, none of the curves recommended by NIST (see National Institute of Standards and Technology. Recommended elliptic curves for federal government use. http://csrc.nist.gov/CryptoToolkit/dss/ecdsa/NISTeCur.pdf, July 1999) can be written in this model. The definition of binary Huff curves is therefore generalized hereinafter to cover all isomorphism classes of ordinary curves over $F_2 m$ for $m \geq 4$.

In section 3 of "Huff's Model for Elliptic Curves", Huff's model is generalized to $axP(y) = byP(x)$ for some monic polynomial $P \in F_2 m[t]$, of degree 2, with non-zero discriminant, and such that $P(0) \neq 0$. Binary Huff curves correspond to the choice $P(t) = t^2 + t + 1$. A more general polynomial, namely $P(t) = t^2 + ft + 1$ with $f \neq 0$, is considered hereinafter.

The following definition is then possible: a generalized binary Huff curve is the set of projective points $(X : Y : Z) \geq P^2 (F_2 m)$ satisfying the equation

$$aX(Y^2 + fYZ + Z^2) = bY(X^2 + fXZ + Z^2), \tag{10}$$

where $a, b, f \in F^*_2 m$ and $a \neq b$.

There are naturally other suitable generalizations of binary Huff curves, such as $P(t) = t^2 + t + e$ with $e \neq 0$. It should be noted that the polynomial $P(t) = t^2 + ft + e$ with $e, f \neq 0$ is not more general as a change of variables can transform this equation into one of the other possible forms.

The affine model of Equation 10 is $ax(y^2 + fy + 1) = by(x^2 + fx + 1)$, which is birationally equivalent to the Weierstraß elliptic curve

$$v(v + (a + b)fu) = u(u + a^2)(u + b^2)$$

under the inverse maps

$$(x, y) \leftarrow \left( \frac{b(u + a^2)}{v}, \frac{a(u + b^2)}{v + (a + b)fu} \right) \text{ and } (u, v) \leftarrow \left( \frac{ab}{xy}, \frac{ab(axy + b)}{x^2 y} \right).$$

The points at infinity are $(a : b : 0)$, $(1 : 0 : 0)$ and $(0 : 1 : 0)$. Point $\boldsymbol{A}$, i.e. the point of intersection of the tangent line at o with the curve, becomes $A = \left(\frac{bf}{a+b}, \frac{af}{a+b}\right)$

Thus, for $m \geq 4$, each ordinary elliptic curve over $F_2m$ is birationally equivalent over $F_2m$ to a generalized binary Huff curve.

It is then possible - and it may be of interest for reasons of performance and security - to transform an elliptic curve over $F_2m$ into a generalized binary Huff curve. Then the formulae given hereinafter may be used for calculations and the result may be transformed back to the original elliptic curve.

The arithmetic on generalized binary Huff curves is easily derived from the formulae given hereinbefore. Et is a generalized binary Huff curve as per Equation (10) and $P = (x_1, y_1)$ and $Q = (x_2, y_2) \in E^+$ are two finite points. The formula given by Equation (3) remains valid for computing the inverse of $P$. An alternate expression for $-P$ is, whenever defined,

$$\bar{x}_1 = \frac{y_1(\hat{\alpha} x_1 + 1)}{\hat{\beta} y_1 + 1} \text{ and } \bar{y}_1 = \frac{x_1(\hat{\beta} y_1 + 1)}{\hat{\alpha} x_1 + 1} \tag{11}$$

where $\hat{\alpha} = \frac{a+b}{bf}$ and $\hat{\beta} = \frac{a+b}{af}$. . The exceptional points of Equation (11) are and the inverses of which are $-P =$

(1:0:0), $-P = (1:0:0), -P = \left(\frac{bf(a+b+af)^2}{(a+b)(a+b+bf)^2}, \frac{af(a+b+bf)^2}{(a+b)(a+b+af)^2}\right), \quad -P = (0:1:0),$ , $-P = (0:1:0),$

and $-P = \left(\frac{(a+b)(a+b+bf)^2}{bf(a+b+af)^2}, \frac{(a+b)(a+b+af)^2}{af(a+b+bf)^2}\right),$ , , respectively.

The doubling formula (Equation (4)) becomes $[2]P = (x_3, y_3)$ with

$$x_3 = \frac{f(a+b)x_1{}^2(1+y_1)^2}{b(1+x_1)^2(1+x_1 y_1)^2} \text{ and } y_3 = \frac{f(a+b)y_1{}^2(1+x_1)^2}{a(1+y_1)^2(1+x_1 y_1)^2}. \tag{12}$$

The exceptional cases are handled in the manner previously described herein; it should be noted that the condition $x_1 y_1 = 1$ only is possible when $Tr(f^1) = 0$, where Tr denotes the trace function defined as the linear function given by Tr: $F_2m \to F_2, \theta \to \sum_{j=0}^{m-1} \theta^{2^j}$.

The formula for dedicated point addition (Equation (5)) remains unchanged.

The formula for unified point addition is, whenever defined, $P + Q = (x_3, y_3)$ with

$$\begin{cases} x_3 = \frac{b(x_1+x_2)(1+x_1 x_2 y_1 y_2) + f(a+b)x_1 x_2(1+y_1 y_2)}{b(1+x_1 x_2)(1+x_1 x_2 y_1 y_2)} \\ y_3 = \frac{a(y_1+y_2)(1+x_1 x_2 y_1 y_2) + f(a+b)y_1 y_2(1+x_1 x_2)}{a(1+y_1 y_2)(1+x_1 x_2 y_1 y_2)} \end{cases}. \tag{13}$$

The exceptional cases are the same as for the (regular) binary Huff curves.

Equation (6') becomes:

$$\begin{cases} x_3 = \frac{(1+y_1 y_2)[b(x_1+x_2)+x_1 x_2(f(a+b)+ay_1+ay_2)]}{b(1+x_1 x_2)(1+x_1 x_2 y_1 y_2)} \\ y_3 = \frac{(1+x_1 x_2)[a(y_1+y_2)+y_1 y_2(f(a+b)+bx_1+bx_2)]}{a(1+y_1 y_2)(1+x_1 x_2 y_1 y_2)} \end{cases}.$$

**EP 2 421 193 A1**

The formula for changing the neutral element (6") is:

$$
\begin{cases}
x_3 = \dfrac{b(1 + x_1 x_2)(1 + x_1 x_2 y_1 y_2)}{b(x_1 + x_2)(1 + x_1 x_2 y_1 y_2) + f(a + b)x_1 x_2(1 + y_1 y_2)} = \\[4mm]
= \dfrac{b(1 + x_1 x_2)^2(1 + x_1 x_2 y_1 y_2)y_1 y_2}{[b(x_1 + x_2)(1 + x_1 x_2 y_1 y_2) + f(a + b)x_1 x_2(1 + y_1 y_2)](1 + x_1 x_2)y_1 y_2} \\[4mm]
y_3 = \dfrac{a(1 + y_1 y_2)(1 + x_1 x_2 y_1 y_2)}{a(y_1 + y_2)(1 + x_1 x_2 y_1 y_2) + f(a + b)y_1 y_2(1 + x_1 x_2)} = \\[4mm]
= \dfrac{a(1 + y_1 y_2)^2(1 + x_1 x_2 y_1 y_2)x_1 x_2}{[b(x_1 + x_2)(1 + x_1 x_2 y_1 y_2) + f(a + b)x_1 x_2(1 + y_1 y_2)](1 + x_1 x_2)y_1 y_2}
\end{cases}
$$

The evaluation of the corresponding projective formula except that $\alpha = \dfrac{f(a+b)}{b}$ and not $\alpha = \dfrac{a+b}{b}$; ; the other value remains the same: $\rho = \dfrac{a}{b}$. .

Figure 1 illustrates a device 10 for performing elliptic curve cryptography calculations using the binary Huff curves described herein. The device 10 is preferably a processor, advantageously a secure cryptoprocessor, which receives input that is processed and then output.

Elliptic curve cryptography uses point multiplication to arrive at an output. Indeed, as mentioned on Wikipedia (Elliptic curve cryptography): "The entire security of ECC depends on the ability to compute a point multiplication and the inability to compute the multiplicand given the original and product points."

Generally speaking, the prior art (see "Elliptic curve cryptography" on Wikipedia) has provided different ways performing point multiplication, for example repeated point addition and double-and-add of which the latter has sprouted efficient variants such as the "windowed method", the "sliding-window method" and the "Montgomery ladder".

During elliptic curve cryptography calculations, the processor 10 receives a point as input, performs at least one point multiplication using the point and outputs the result.

An example of practical use is the Diffie-Hellman key exchange. Alice and Bob have agreed on an elliptic curve and a point $P$ on the curve, both of which may be public. Alice chooses a secret integer $k_a$ and Bob independently chooses a secret integer $k_b$. Alice sends $[k_a]P$ to Bob and receives $[k_b]P$ in return. Then Alice and Bob calculated the common secret key as $[k_a k_b]P$, which naturally also is a point on the curve.

The multiplicand may for example also be a secret key. It will be appreciated that the point $P$ and the multiplicand may be received as input to the processor, but it is also possible for one or the other, or both, to be stored in the processor itself, for example as part of a program being executed.

Each feature disclosed in the description and (where appropriate) the claims and drawings may be provided independently or in any appropriate combination. Reference numerals appearing in the claims are by way of illustration only and shall have no limiting effect on the scope of the claims.

## Claims

1. A method for performing an arithmetic operation on a binary Huff curve defined by a set of projective points $(X : Y : Z) \in \mathrm{P}^2(\mathbf{F}_{2^m})$ satisfying the equation $aX(Y^2 + fYZ + Z^2) = bY(X^2 + fXZ + Z^2)$, where $a, b, f \in \mathrm{F}^*_{2^m}$ and $a \neq b$, the method comprising the steps, performed by a processor (10), of:

   - obtaining a first finite point $P = (x_1, y_1) \in E$,
   - performing the arithmetic operation using the first point $P$ to obtain a second point $P'$, and
   - outputting the second point $P'$,

   wherein the arithmetic operation comprises at least one of:

calculating a point inverse using the formula $-\boldsymbol{P} = (\bar{x}_1, \bar{y}_1) \in E$ with $\dfrac{y_1(b+ax_1y_1)}{a+bx_1y_1}$ and

$\bar{y}_1 = \dfrac{x_1(a+bx_1y_1)}{b+ax_1y_1}$ or the formula $-\boldsymbol{P} = (\bar{x}_1, \bar{y}_{1)} \in E$ with $\bar{x}_1 = \dfrac{y_1(\hat{\alpha}x_1+1)}{\hat{\beta}y_1+1}$ $\bar{y}_1 = \dfrac{x_1(\hat{\beta}y_1+1)}{\hat{\alpha}x_1+1}$, and

$\hat{\alpha} = \dfrac{a+b}{bf}$, where and $\hat{\beta} = \dfrac{a+b}{af}$, ,

calculating a point doubling using the formula $[2]\boldsymbol{P} = (x_3, y_3)$ with

$\dfrac{f(a+b)x_1{}^2(1+y_1)^2}{b(1+x_1)^2(1+x_1y_1)^2}$ and $y_3 = \dfrac{f(a+b)y_1{}^2(1+x_1)^2}{a(1+y_1)^2(1+x_1y_1)^2}$, , calculating a point addition between the point P and a further finite point $\boldsymbol{Q} = (x_2,y_2) \in E$, where $\boldsymbol{P} \neq \boldsymbol{Q}$, using the formula $\boldsymbol{P} + \boldsymbol{Q} = (x_3,y_3)$ with $x_3 =$

$\dfrac{(x_1y_1+x_2y_2)(1+y_1y_2)}{(y_1+y_2)(1+x_1x_2y_1y_2)}$ and $y_3 = \dfrac{(x_1y_1+x_2y_2)(1+x_1x_2)}{(x_1+x_2)(1+x_1x_2y_1y_2)}$, and

calculating a point addition between the point $\boldsymbol{P}$ and a further finite point $\boldsymbol{Q} = (x_2,y_2) \in E$, where P may be equal

to $\boldsymbol{Q}$, using the formula $\boldsymbol{P} + \boldsymbol{Q} = (x_3,y_3)$ with
$$\begin{cases} x_3 = \dfrac{b(x_1+x_2)(1+x_1x_2y_1y_2)+f(a+b)x_1x_2(1+y_1y_2)}{b(1+x_1x_2)(1+x_1x_2y_1y_2)} \\ y_3 = \dfrac{a(y_1+y_2)(1+x_1x_2y_1y_2)+f(a+b)y_1y_2(1+x_1x_2)}{a(1+y_1y_2)(1+x_1x_2y_1y_2)} \end{cases}.$$

2. The method of claim 1, wherein $f = 1$.

3. The method of claim 1, the method is a cryptographic method.

4. The method of claim 1, further comprising:

- a preceding step of transforming a point on a first elliptic curve $v(v + (a + b) fu) = u(u + a^2)(u + b^2)$ into the

first point $\boldsymbol{P}$ on the binary Huff curve under the map $(x, y) \leftarrow \left( \dfrac{b(u+a^2)}{v}, \dfrac{a(u+b^2)}{v+(a+b)fu} \right)$, , and

wherein the step of performing the arithmetic operation comprises obtaining an intermediate point $\boldsymbol{P''}$ on the binary Huff curve that is transformed into the second point P' on the first elliptic curve under the map

$(u, v) \leftarrow \left( \dfrac{ab}{xy}, \dfrac{ab(axy+b)}{x^2y} \right)$. .

5. A processor (10) for performing an arithmetic operation on a binary Huff curve defined by a set of projective points $(X : Y : Z) \in P^2(F_{2^m})$ satisfying the equation $aX(Y^2 + fYZ + Z^2) = bY(X^2 + fXZ + Z^2)$, where a, b, f $\in$ F*$_{2^m}$ and a $\neq$ b, the processor (10) being adapted to:

- obtain a first finite point $\boldsymbol{P} = (x_1,y_1) \in E$,
- perform the arithmetic operation using the first point $\boldsymbol{P}$ to obtain a second point $\boldsymbol{P'}$, and
- output the second point $\boldsymbol{P'}$,

wherein the arithmetic operation comprises at least one of:

calculating a point inverse using the formula $-\boldsymbol{P} = (\bar{x}1, \bar{y}_1) \in E$ with $\bar{x}_1 = \dfrac{y_1(b+ax_1y_1)}{a+bx_1y_1}$ and

$$\overline{y}_1 = \frac{x_1(a+bx_1y_1)}{b+ax_1y_1}$$ or the formula $-\boldsymbol{P} = (\overline{x}1, \overline{y}_1) \in E$ with $\overline{x}_1 = \frac{y_1(\hat{\alpha}x_1+1)}{\hat{\beta}y_1+1}$ and $\overline{y}_1 = \frac{x_1(\hat{\beta}y_1+1)}{\hat{\alpha}x_1+1}$, where

$$\hat{\alpha} = \frac{a+b}{bf} \text{ and } \hat{\beta} = \frac{a+b}{af},$$

calculating a point doubling using the formula [2] $\boldsymbol{P} = (x_3, y_3)$ with $x_3 = \frac{f(a+b)x_1{}^2(1+y_1)^2}{b(1+x_1)^2(1+x_1y_1)^2}$ and

$$y_3 = \frac{f(a+b)y_1{}^2(1+x_1)^2}{a(1+y_1)^2(1+x_1y_1)^2},$$

calculating a point addition between the point P and a further finite point Q = $(x_2,y_2) \in E$, where $P \neq Q$, using

the formula $\boldsymbol{P} + \boldsymbol{Q} = (x_3, y_3)$ with $x_3 = \frac{(x_1y_1+x_2y_2)(1+y_1y_2)}{(y_1+y_2)(1+x_1x_2y_1y_2)}$ and $y_3 = \frac{(x_1y_1+x_2y_2)(1+x_1x_2)}{(x_1+x_2)(1+x_1x_2y_1y_2)}$, and

calculating a point addition between the point P and a further finite point $\boldsymbol{Q}$ = $(x_2,y_2) \in E$, where $\boldsymbol{P}$ may be equal to $\boldsymbol{Q}$, using the formula $\boldsymbol{P} + \boldsymbol{Q} = (x_3, y_3)$ with

$$\begin{cases} x_3 = \dfrac{b(x_1+x_2)(1+x_1x_2y_1y_2)+f(a+b)x_1x_2(1+y_1y_2)}{b(1+x_1x_2)(1+x_1x_2y_1y_2)} \\ y_3 = \dfrac{a(y_1+y_2)(1+x_1x_2y_1y_2)+f(a+b)y_1y_2(1+x_1x_2)}{a(1+y_1y_2)(1+x_1x_2y_1y_2)} \end{cases}.$$

Figure 1

| | Europäisches Patentamt European Patent Office Office européen des brevets | **EUROPEAN SEARCH REPORT** | Application Number EP 10 30 6285 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MARC JOYE ET AL: "Huffâ s Model for Elliptic Curves", 19 July 2010 (2010-07-19), ALGORITHMIC NUMBER THEORY, SPRINGER BERLIN HEIDELBERG, BERLIN, HEIDELBERG, PAGE(S) 234 - 250, XP019147232, ISBN: 978-3-642-14517-9 * section 3.4 * ----- | 1-4 | INV. H04L9/30 |
| Y | "CHAPTER 3: Elliptic Curve Arithmetic ED - Darrel Hankerson; Alfred Menezes; Scott Vanstone", 1 January 2004 (2004-01-01), GUIDE TO ELLIPTIC CURVE CRYPTOGRAPHY, SPRINGER, PAGE(S) 75 - 152, XP001525413, ISBN: 978-0-387-95273-4 * section 3.1 * ----- | 1-4 | |
| A | Hongfeng Wu; Rongquan Feng: "Elliptic curves in Huff's model", IACR ePrint Archive , 12 July 2010 (2010-07-12), XP002665127, Retrieved from the Internet: URL:http://eprint.iacr.org/cgi-bin/getfile.pl?entry=2010/390&version=2010 * the whole document * ----- | 1-4 | **TECHNICAL FIELDS SEARCHED (IPC)** H04L |

The present search report has been drawn up for all claims

| Place of search | Date of completion of the search | Examiner |
|---|---|---|
| Munich | 6 December 2011 | Billet, Olivier |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALFRED MENEZES ; TATSUAKI OKAMOTO ; SCOTT VANSTONE.** Reducing elliptic curve discrete logarithms to a finite field. *IEEE Transactions on Information Theory,* 1993, vol. 39 (5), 1639-1646
- **JOSEPH H. SILVERMAN.** The Arithmetic of Elliptic Curves, volume 106 of Graduate Texts in Mathematics. Springer-Verlag, 1986, vol. 106
- **DAVID V. CHUDNOVSKY ; GREGORY V. CHUDNOVSKY.** Sequences of numbers generated by addition in formal groups and new primality and factorization tests. *Advances in Applied Mathematics,* 1986, vol. 7 (4), 385-434
- Differential power analysis. **PAUL KOCHER ; JOSHUA JAFFE ; BENJAMIN JUN.** Advances in Cryptology - CRYPTO '99. Springer-Verlag, 1999, vol. 1666, 388-397
- Exceptional procedure attack on elliptic curve cryptosystems. **TETSUYA IZU ; TSUYOSHI TAKAGI.** Public Key Cryptography - PKC 2003, volume 2567 of Lecture Notes in Computer Science. Springer, 2003, vol. 2567, 244-239
- Advances in Cryptology - CRYPTO 2009. **DANIEL J. BERNSTEIN ; BATCH BINARY EDWARDS.** Lecture Notes in Computer Science. Springer, 2009, vol. 5667, 317-336
- **GERALD B. HUFF.** Diophantine Problems in Geometry and Elliptic Ternary Forms. *Duke Math. J.,* 1948, vol. 15, 443-453
- **WILLIAMS D. PEEPLES, JR.** Elliptic Curves and Rational Distance Sets. *Proc. Am. Math. Soc.,* 1954, vol. 5, 29-33
- Huff's Model for Elliptic Curves. **MARC JOYE ; MEHDI TIBOUCHI ; DAMIEN VERGNAUD.** Algorithmic Number Theory (ANTS-IX), volume 6197 of Lecture Notes in Computer Science. Springer, 2010, vol. 6197, 234-250
- **HENDRIK W. LENSTRA, JR.** Factoring Integers with Elliptic Curves. *Annals of Mathematics,* 1987, vol. 126 (2), 649-673
- **PETER L. MONTGOMERY.** Speeding up the Pollard and Elliptic Curve Methods of Factorization. *Mathematics of Computation,* 1987, vol. 48 (177), 243-264
- Fast Multiplication on Elliptic Curves over GF(2m) without Precomputation. **JULIO LÓPEZ ; RICARDO DAHAB.** Cryptographic Hardware and Embedded Systems - CHES '99, volume 1717 of Lecture Notes in Computer Science. Springer, 1999, vol. 1717, 316-327
- On Montgomery-like Representations for Elliptic Curves over GF(2k). **MARTIJN STAM.** Public Key Cryptography - PKC 2003, volume 2567 of Lecture Notes in Computer Science. Springer, 2003, vol. 2567, 240-253
- **PIERRICK GAUDRY ; DAVID LUBICZ.** The Arithmetic of Characteristic 2 Kummer Surfaces and of Elliptic Kummer Lines. *Finite Fields and Applications,* 2009, vol. 15, 246-260